# FASCICULE DE BREVET EUROPEEN

(11) **EP 1 598 139 B1**
(45) Date de publication et mention de la délivrance du brevet: **13.04.2011**
(21) Numéro de dépôt: 05104119.2
(22) Date de dépôt: 17.05.2005
(51) Int. Cl.: B23K 9/028, B23K 33/00

(54) **Procédé de soudage TIG**
WIG-Schweissverfahren
TIG welding method

(30) Priorité: 18.05.2004 FR 0405416
(43) Date de publication de la demande: 23.11.2005
(73) Titulaire: SNECMA, 75015 Paris (FR)
(72) Inventeur: Duret, Jean-Michel, Serge, Marcel, 91070 Bondoufle (FR); Guerniou, Pascal, 91380 Chilly Mazarin (FR)
(74) Mandataire: David, Daniel

(56) Documents cités:
- DE-A- 19 623 103
- DE-A- 19 926 796
- US-A- 3 205 340
- US-A- 4 481 399

## Description

La présente invention concerne le soudage à l'arc de deux pièces entre elles au moyen d'une électrode réfractaire sous une atmosphère gazeuse inerte.

Elle concerne le soudage d'une première pièce métallique à une seconde pièce métallique, les deux pièces étant appliquées bord contre bord. En particulier elle vise le raccordement d'une pièce cylindrique, telle qu'un guide-bougie, à un orifice ménagé dans une seconde pièce, telle qu'une chemise de chambre de combustion de moteur à turbine à gaz.

Une chambre de combustion est de forme généralement annulaire et comprend une chemise ménageant des ouvertures axiales en amont pour le passage de l'air et des moyens de distribution de carburant dans l'enceinte de la chambre. A proximité de ces moyens, la chemise présente sur sa paroi périphérique des ouvertures radiales pour le passage des bougies d'allumage du carburant. Les bougies sont fixées à la paroi par l'intermédiaire de guides bougies qui sont globalement cylindriques. Ces guides bougies sont soudés par leur bord antérieur le long du bord d'un orifice ménagé dans la paroi de la chemise.

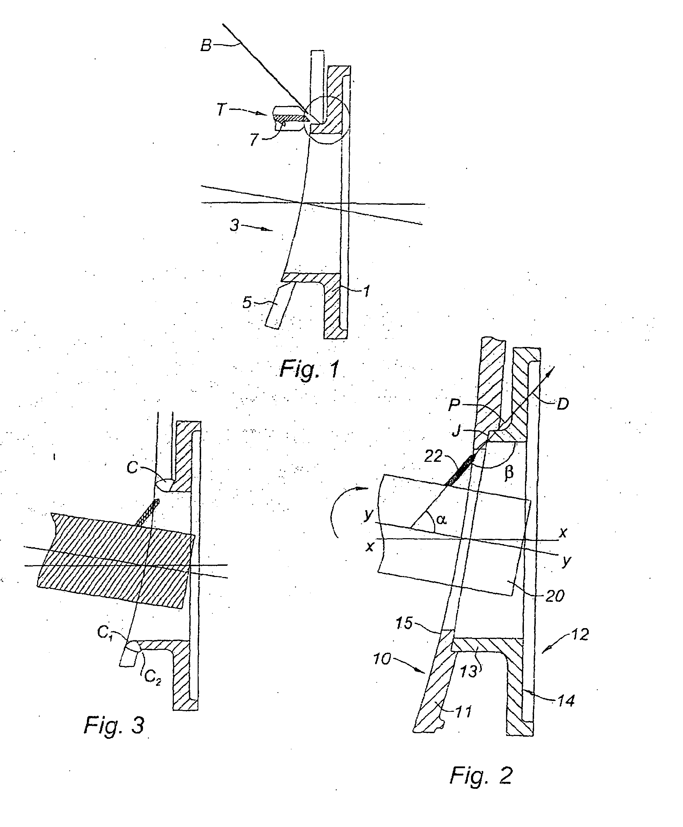

Actuellement, on procède par soudage TIG manuel. On a représenté sur la figure 1 la position des deux pièces. Le tube guide bougie 1 est engagé dans l'orifice usiné 3 à travers la paroi 5 de la chambre de combustion avant soudage. La paroi de la chambre que l'on a représentée en coupe axiale présente une courbure également dans cette direction axiale. Le bord de l'orifice 3 est chanfreiné de façon à ménager un espace avec le bord extérieur du tube. Le soudage consiste à placer une torche T à électrode 7 de tungstène au-dessus de cet espace en apportant le métal au moyen d'une baguette B. Lors d'un première passe on dépose un premier cordon dans le fond de l'espace de manière à assurer la pénétration de la soudure. Dans une deuxième passe on comble tout l'espace.

Ce mode manuel présente l'inconvénient d'exiger une grande dextérité de la part de l'opérateur en raison de la complexité de la zone de jonction. Par ailleurs en progressant le long du cordon de soudure, il doit constamment adapter la quantité d'énergie à apporter car les épaisseurs et les masses à souder ne sont pas constantes. Le soudage n'est pas régulier. Il s'ensuit des déformations qui nécessitent notamment un chauffage final de l'ensemble pour relâcher les contraintes internes apparues lors de l'opération de soudage. Les irrégularités de surface à l'intérieur de la chambre ou dans le tube guide imposent par ailleurs une reprise du cordon de soudure par usinage. Parfois également, les contraintes sont suffisamment élevées pour engendrer des criques dans la zone de jonction.

On rappelle que le soudage TIG « Tungsten Inert Gas » est un procédé de soudage à l'arc électrique avec électrode réfractaire sous atmosphère gazeuse. Cette technique s'utilise avec ou sans métal d'apport. Le gaz inerte, généralement à base d'argon ou d'hélium, isole de l'air le métal en fusion, les zones chaudes et l'électrode tungstène. On évite ainsi toute oxydation. Dans une veine de gaz inerte, on fait jaillir un arc électrique entre l'électrode en tungstène infusible et la pièce à souder. La chaleur dégagée par l'arc fait fondre les bords de la pièce et l'éventuel métal d'apport qui contribue à la formation du cordon. Le soudage TIG est un procédé qui est manuel ou automatique étant robotisé. Il est réservé aux épaisseurs faibles et moyennes, inférieures à 5-6 mm, car les vitesses de soudage pour les plus grandes épaisseurs sont inférieures à celles des autres procédés.

La présente invention vise à remédier aux inconvénients que l'on rencontre avec le soudage manuel tel qu'il était appliqué jusqu'à présent.

Conformément à l'invention, le procédé de soudage TIG selon la revendication 1 est fourni.

L'angle rentrant est, en chaque position de l'électrode le long de la soudure, l'angle supérieur à 180° défini par les deux parois.

Par le procédé de l'invention, on utilise la matière constituant les pièces à souder sans apport extérieur, et par la disposition de l'électrode par rapport à la surface de jonction ou plan de joint, on repousse le bain de fusion et le cordon en formation dans l'angle saillant associé. L'énergie appliquée est suffisante pour qu'il se forme un bourrelet dans l'angle rentrant associé à l'angle saillant. Il s'ensuit que l'on peut aisément automatiser le soudage de deux pièces au moyen d'un appareillage relativement simple, en un seul passage.

L'invention s'applique au soudage de pièces dont l'une, la première, est cylindrique. On emploie alors avantageusement une machine de soudage de type orbital connue pour le soudage de tubes. La trajectoire de l'extrémité de l'électrode est dans ce cas circulaire.

Un apport de matière est fourni par l'une des parois qui est avantageusement prévue de manière à former un ressaut avant soudage.

Selon l'invention on ménage sur la seconde paroi un lamage contre lequel on met en appui le bord d'extrémité de la première paroi avant soudage. Celà est particulièrement avantageux lorsque la paroi de la seconde pièce a une forme de calotte sphérique ou semblable ou bien présente un rayon de courbure suffisant.

Afin de tenir compte de la géométrie complexe des pièces à souder, on fait de préférence varier la vitesse de déplacement de l'électrode et l'intensité du courant qui la traverse. Ces deux paramètres sont réglés en fonction de la géométrie locale des deux pièces dans la zone de jonction le long de la trajectoire de l'extrémité de l'électrode et du pompage thermique le cas échéant.

On décrit maintenant un mode de réalisation non limitatif de l'invention en se reportant aux dessins sur lesquels :
■ La figure 1 montre le mode de soudage manuel selon l'art antérieur,
■ La figure 2 montre un premier exemple de réalisation du soudage conformément à l'invention,
■ La figure 3 montre les deux pièces après soudage,

On a représenté sur la figure 2 la partie de la chemise 11 extérieure d'une chambre 10 de combustion de turboréacteur qui se situe au niveau d'un orifice de passage d'une bougie d'allumage. La bougie n'a pas été représentée ni le reste de la chemise. Un guide bougie 12 permet le maintien en position de la bougie à l'intérieur de la chambre de combustion. Cette première pièce est ici constituée d'une portion cylindrique 13 d'axe XX et d'une collerette 14 dans le prolongement vers l'extérieur de la portion cylindrique.

La chemise extérieure 11 de la chambre a une forme générale cylindrique avec vers l'amont une partie généralement en forme de calotte sphérique. Des ouvertures axiales, non représentées, y sont ménagées pour le passage de moyens d'alimentation de la chambre en carburant et d'air de combustion. Les bougies assurent l'allumage du mélange air carburant.

Pour fixer le guide 12 sur la chemise 11, on a alésé un orifice traversant circulaire. On a réduit l'épaisseur de la paroi sur le pourtour de l'orifice par lamage d'axe perpendiculaire YY, pour former une surface d'appui contre laquelle on place la pièce cylindrique 13 par son bord d'extrémité. Cette surface constitue ici le plan de joint J. Le bord d'extrémité et la surface d'appui sont dans un même plan. L'axe YY fait ici un angle avec l'axe XX en raison de la courbure de la chemise de la chambre. On voit sur la figure que le diamètre de l'ouverture pratiquée dans la seconde paroi est légèrement plus faible que celui du tube 13.

Cette portion forme un ressaut 15 annulaire dont la fonction est de constituer un métal d'apport pour la soudure.

Pour souder les deux pièces l'une à l'autre, on utilise une machine de soudage TIG dont on aperçoit seulement l'extrémité du porte électrode 20.

Une installation de soudage TIG de type orbital est en soi connue. Elle comprend un générateur de courant et une tête de soudage. La tête de soudage est montée sur une embase, et comprend un support du porte électrode avec son enveloppe de gaz. Le support est mobile sur son embase pour permettre une mise en place rigoureuse de l'électrode par rapport à la zone de soudage. Le porte électrode a une forme de crayon ou de barre axiale. Un mécanisme entraîne en rotation le porte électrode sur lui-même autour de son axe. L'ensemble est connecté à un automate programmable. Cet automate commande tous les paramètres ayant une incidence sur la soudure : les valeurs du courant électrique, les vitesses d'avancement orbital de l'extrémité de l'électrode, les temps de chauffage et les débits de gaz de protection, l'argon par exemple. L'automate découpe un cycle de 360° en un nombre de séquences déterminées, 486 par exemple, dont chacune peut contenir des valeurs différentes des paramètres. On peut ainsi faire varier les paramètres pour chaque position de l'électrode sur sa trajectoire orbitale en fonction de l'épaisseur locale des pièces des masses ou de la présence de zones de pompage thermique.

Le porte électrode 20 est mis en place de façon à être coaxial à l'axe YY perpendiculaire au plan de jonction entre les deux pièces. Il porte une électrode en tungstène 22 faisant un angle α déterminé avec l'axe YY. La représentation est schématique, on ne voit pas la jupe de guidage du gaz de protection. L'électrode est orientée dans l'angle rentrant formé par la première paroi 13, de la pièce cylindrique, et la seconde paroi 11 de la seconde pièce en direction du ressaut 15.

L'électrode forme un angle P avec la paroi 13 tel que la direction D de l'axe de l'électrode passe à travers le ressaut 15. De préférence, la direction D est comprise dans l'angle saillant formé par les parois 13 et 12 complémentaire à 360° de l'angle rentrant ci-dessus.

L'angle β est compris entre 0 et 180°. L'électrode est positionnée de préférence de manière à ce que sa direction D traverse le plan de joint J, notamment en son milieu et passe par le point P qui est à l'intersection des deux parois 13 et 15 dans l'angle rentrant.

L'angle α est choisi en relation avec l'angle β de telle façon que, quelle que soit la position orbitale de l'électrode autour de l'axe YY, sa direction D soit toujours bien orientée. De préférence, il est défini de façon à assurer à l'angle β une valeur qui varie aussi peu que possible tout au long de la rotation du porte-électrode. Cette inclinaison de l'électrode par rapport à la surface de jonction assure un brassage du bain de fusion et la formation d'un cordon de soudure ne nécessitant pas de préférence de reprise par usinage.

Pour le soudage des pièces, on commence par positionner la pièce 13 sur la chemise en appui contre la surface préparée. On l'y fixe provisoirement. Ensuite on met en place l'électrode de telle façon que son axe de rotation passe par le plan d'appui et l'axe XX. L'extrémité de l'électrode est à une distance permettant la formation de l'arc de soudage.

On met en action la machine. Le porte électrode tourne sur lui-même à partir de la position initiale qui a été déterminée selon le programme de l'automate. On a programmé la vitesse déplacement de la tête de l'électrode ainsi que l'intensité du courant traversant l'électrode en fonction de la position angulaire de celle-ci au cours de sa rotation. En effet on voit que la quantité de métal sous l'arc n'est pas constante à cause de la géométrie complexe des pièces. On assure la formation d'un cordon homogène en adaptant ces deux paramètres à la géométrie. On adapte aussi le débit du gaz de protection. Par exemple pour le soudage d'un tube guide bougie, on peut prévoir un cycle de 360° avec cinq ou six séquences angulaires dont les vitesses d'avance de la tête d'électrode et l'intensité du courant de soudage diffèrent.

Un exemple de cycle est le suivant

| | Séquence 1 | Séquence 2 | Séquence 3 | Séquence 4 | Séquence 5 recouvrement |
|---|---|---|---|---|---|
| Secteur de rotation angulaire | 35° | 105° | 75° | 145° | 5° |
| Vitesse cm/min. | 20 | 22 | 26 | 28 | 17 |
| Intensité A | 40 | 41 | 41 | 38 | 35 |
| Débit gaz l/min. | 5 | 5 | 6 | 7 | 3 |

On a représenté sur la figure 3, le guide bougie soudé à la chemise extérieure de chambre de combustion. Grâce au procédé de l'invention le cordon de soudure C présente une forme rayonnante C1 sans bourrelet dans la veine de gaz aussi bien du côté de la chambre que du côté du tube. A l'opposé un bourrelet C2 s'est formé dans l'angle rentrant défini par les parois 13 et 11.

La présence du bourrelet permet un contrôle visuel simple de la qualité de la soudure.

## Revendications

1. Procédé de soudage TIG d'une première pièce (12) formant un guide bougie avec une première paroi (13) cylindrique et un bord d'extrémité à une deuxième pièce (10) formant une chambre de combustion de moteur à turbine à gaz avec une deuxième paroi (11) dans laquelle un orifice circulaire d'axe YY a été alésé, les deux pièces étant jointes par soudage l'une à l'autre le long d'une surface de jonction formée par le bord de l'orifice de la deuxième paroi (11) et ledit bord d'extrémité de la première paroi, cylindrique, la première paroi formant des secteurs angulaires avec la deuxième paroi, la seconde paroi présentant un lamage contre lequel on met en appui le bord d'extrémité de la première paroi avant soudage, **caractérisé par le fait que** l'électrode (22) de soudage étant disposée dans le secteur angulaire à l'intérieur dudit orifice, on déplace l'électrode (22) le long de ladite surface de jonction l'axe (D) de l'électrode formant un angle (β) par rapport à la première paroi (13) cylindrique inférieur à 180°, de sorte que l'axe (D) de l'électrode traverse la matière de la première et de la deuxième paroi en traversant les deux secteurs angulaires formés par les deux parois, l'énergie de soudage appliquée étant suffisante pour former un bourrelet (C2, C'2) dans le secteur d'angle opposé à celui comprenant l'électrode.

2. Procédé selon la revendication précédente, dans lequel ladite seconde paroi (11) forme un ressaut (15) le long de la surface de jonction avant soudage.

3. Procédé selon l'une des revendications précédentes selon lequel on fait varier la vitesse de déplacement et l'intensité du courant de l'électrode en fonction de la géométrie des deux pièces le long de la trajectoire de l'extrémité de l'électrode.

## Claims

1. TIG welding method for a first part (12) which forms a plug guide with a first cylindrical wall (13) and an end edge to a second part (10) to form a combustion chamber for a gas turbine engine with a second wall (11) inside which a circular orifice with an axis Y-Y has been bored, wherein the two parts are joined by welding them to one another along a junction surface formed by the edge of the orifice of the second wall (11) and said end edge of the first, cylindrical wall, wherein the first wall forms angular sectors with the second wall, wherein the second wall has a counter-bore against which the end edge of the first wall is brought into contact, **characterised in that** the welding electrode (22) is positioned in the angular sector inside said orifice, wherein the electrode (22) is moved along said junction surface and the axis (D) of the electrode forms an angle (β) with respect to the first cylindrical wall (13) that is less than 180°, such that the axis (D) of the electrode passes through the material of the first and the second walls by passing through the two angular sectors formed by the two walls, wherein the welding energy applied is sufficient to form a bead (C2, C'2) in the angular sector opposite to that containing the electrode.

2. Method according to the previous claim, in which said second wall (11) forms a projection (15) along the junction surface prior to welding.

3. Method according to any of the previous claims, in which the speed of displacement and the intensity of the current of the electrode are varied in function of the geometry of the two parts along the trajectory of the end of the electrode.

## Patentansprüche

1. Verfahren zum TIG-Schweißen eines ersten Teils (12), das eine Kerzenführung mit einer ersten zylinderförmigen Wand (13) und einer Endkante bildet, an ein zweites Teil (10), das eine Brennkammer eines Motors mit Gasturbine mit einer zweiten Wand (11) bildet, in der eine kreisförmige Öffnung in YY-Achse gebohrt worden ist, wobei die beiden Teile durch Schweißen des einen an das andere entlang einer Verbindungsfläche verbunden werden, die von der Kante der Öffnung der zweiten Wand (11) und der besagten Endkante der ersten, zylinderförmigen, Wand gebildet wird, wobei die erste Wand Winkelabschnitte mit der zweiten Wand bildet, wobei die zweite Wand eine Senkung aufweist, gegen die die Endkante der ersten Wand vor dem Schweißen angedrückt wird, **dadurch gekennzeichnet, daß**, da die Schweißelektrode (22) im Winkelabschnitt im Innern der besagten Öffnung angeordnet ist, die Elektrode (22) entlang der besagten Verbindungsfläche verschoben wird, wobei die Achse (D) der Elektrode einen Winkel (β) gegenüber der ersten zylinderförmigen Wand (13) unter 180 Grad bildet, so daß die Achse (D) der Elektrode den Werkstoff der ersten und der zweiten Wand durchquert, indem sie die beiden Winkelabschnitte durchquert, die von den beiden Wänden gebildet werden, wobei die aufgebrachte Schweißenergie dazu ausreicht, einen Wulst (C2, C'2) im Winkelabschnitt zu bilden, der demjenigen entgegengesetzt ist, der die Elektrode umfaßt.

2. Verfahren nach vorstehendem Anspruch, **dadurch gekennzeichnet, daß** die besagte zweite Wand (11) einen Vorsprung (15) entlang der Verbindungsfläche vor dem Schweißen bildet.

3. Verfahren nach einem beliebigen der vorstehenden Ansprüche, bei dem die Verschiebungsgeschwindigkeit und die Stromstärke der Elektrode je nach der Geometrie der beiden Teile entlang der Laufbahn des Endes der Elektrode variiert werden.
